# EUROPEAN PATENT SPECIFICATION

(11) **EP 4 668 122 B1**
(45) Date of publication and mention of the grant of the patent: **29.07.2026**
(21) Application number: 24183545.3
(22) Date of filing: 20.06.2024
(51) Int. Cl.: G06F 12/0862, G06F 12/0897

(54) **METHOD AND CORRESPONDING APPARATUS FOR FILTERING PREFETCH REQUESTS**
VERFAHREN UND ENTSPRECHENDE VORRICHTUNG ZUM FILTERN VON VORAUSLADEANFRAGEN
PROCÉDÉ ET APPAREIL CORRESPONDANT POUR FILTRER DES REQUÊTES DE PRÉEXTRACTION

(43) Date of publication of application: 24.12.2025
(73) Proprietor: Huawei Technologies Co., Ltd., Shenzhen, Guangdong 518129 (CN)
(72) Inventor: Vavouliotis, Georgios, 80992 Munich (DE); Grot, Boris, 80992 Munich (DE); Peled, Leeor, 80992 Munich (DE)
(74) Representative: MERH-IP Matias Erny Reichl Hoffmann Patentanwälte PartG mbB

(56) References cited:
- EP-A1- 2 993 586
- US-A1- 2009 210 662
- US-A1- 2015 026 414
- US-A1- 2019 179 766

## Description

### Field of the Invention

This invention relates to a method and corresponding apparatus for filtering prefetch requests.

### Background of the Invention

Cache prefetching speeds up fetch operations by caching a memory block associated with an anticipated fetch instruction. Aggressive prefetching can increase the chance of a memory block for a fetch instruction being cached, i.e. reducing demand access misses (being a fetch for which the data is not cached). The downside is an increased risk of a cache block not being used, representing a waste of caching resources.

As such, cache prefetchers must accurately anticipate future fetch instructions. For example, spatial cache prefetchers anticipate fetch instructions based on the similarity of access patterns across different memory regions. Temporal cache prefetchers anticipate fetch instructions based on the premise that there will be a recurrence of past demand access misses in the near future, a demand access miss being a fetch for which the data is not cached.

Prefetch filtering attempts to identify inaccurate or unnecessary prefetch instructions to reduce wasted caching resources, ideally whilst maintaining the chance of a memory block for a fetch instruction being cached. Article "Perceptron-Based Prefetch Filtering" (E. Bhatia et al., 2019 ACM/IEEE 46th Annual International Symposium on Computer Architecture (ISCA), Phoenix, AZ, USA, 2019, pp. 1-13) discloses perceptron-based, prefetcher specific, filter training in the physical address space.

EP2993586A1 discloses a cross-page prefetching method. The method includes the steps as follows: receiving an indication message, sent by a cache, that a physical address is missing, wherein the indication message carries a mapped-to first physical address and contiguity information of a first physical page to which the first physical address belongs; acquiring a prefetching address according to the first physical address and a step size that is stored in a prefetching device; and if a page number of a physical page to which the prefetching address belongs is different from a page number of the first physical page, and it is determined, according to the contiguity information of the first physical page, that the first physical page is contiguous, prefetching data at the prefetching address.

### Brief Summary of Invention

An objective of the present disclosure is to provide enhanced filtering of prefetch requests.

In accordance with the present invention, there is provided a method and corresponding apparatus as claimed in the accompanying claims.

In particular, a method is provided for of filtering requests for a cache, wherein the requests comprise page-cross prefetch requests, and wherein the cache is a virtually indexed physically tagged (VIPT) cache, the method comprising the steps of: correlating program features and/or system features associated with the requests to the determined usefulness of those requests to achieve correlation results; training a page-cross prefetch filter with the correlation results; and determining whether to permit or discard a subsequent request using the trained filter; and wherein a request is determined to be useful when either: for a permitted request, a corresponding cache block brought into the cache served a demand memory access before its eviction from the cache; or, for a discarded request, a corresponding cache block that would have been brought into the cache would have served a demand memory access before its eviction from the cache..

Whilst conventional prefetchers have always discarded page-cross prefetch requests given the technical complexities of and risks associated with executing such a prefetch, the inventors have realised that in respect of VIPT caches, prefetchers for such caches can cross page boundaries. That being the case, training such a filter based on corresponding program features and/or system features can be realised and, moreover, that this may be possible using hardware prefetchers placed alongside VIPT caches.

The method may further comprise: for permitted requests, tracking corresponding cache blocks brought into the cache to determine if those cache blocks served a demand memory access before their eviction from the cache. In particular, tracking may be done by adding one or more data bits to cache blocks brought into the cache, wherein the one or more data bits indicate that a cache block was brought into the cache by a page-cross prefetch request. Also, the usefulness of a permitted request may be determined upon eviction of corresponding cache blocks from the cache.

The method may further comprise, for discarded requests: storing addresses of corresponding cache blocks or derivatives thereof; and upon a demand access miss, searching those addresses or derivatives thereof to determine if the demand access miss could have been avoided by not discarding a request.

The correlation results may train the filter by updating weightings which relate program and/or system features associated with a request to the usefulness of that request.

For example, for permitted requests, the correlation results may update counters for corresponding program and/or system features by: increasing a counter if a cache block brought into the cache serves a demand memory access before eviction from the cache, and decreasing a counter if a cache block brought into a cache does not serve a demand memory access before eviction from the cache.

Similarly, for discarded requests, the correlation results may update counters for corresponding program and/or system features by: increasing a counter if a cache block that would have been brought into the cache would have served one or more demand memory accesses before eviction from the cache, and decreasing a counter if a cache block that would have been brought into the cache would not have served a demand memory access before eviction from the cache.

The correlation results may train the filter by updating saturation counters for corresponding program features in a perceptron weight table.

The step of determining whether to permit or discard a subsequent request using the trained filter may be done by: comparing to a threshold a cumulative weighting which relates program and/or system features associated with that request to the usefulness of that request, whereby if the threshold is exceeded, that request is permitted and if not, that request is discarded, and wherein the threshold is a dynamic threshold which is tuned at runtime for optimisation with different applications and/or execution phases.

Correlated program features may include at least one of the following, or combination(s) or hash(es) thereof: Delta (being the difference between addresses of consecutive memory accesses), Virtual Page Number (VPN, being the virtual address of a prefetch request), Program Counter (PC), PC⊕Delta, PC⊕VPN, PC⊕CacheLineOffset, CacheLineOffset (being the bits used to determine the byte to be accessed from the cache line), VPN⊕Delta, CacheLineOffset+FirstPageAccess (computed by left shifting CacheLineOffset and adding FirstPageAccess at the most significant bit position), FirstPageAccess (being binary indicating if a page-cross prefetch is to a recently touched page), PC+FirstPageAccess (computed by left shifting PC and adding FirstPageAccess bit at the most significant bit position), Delta+FirstPageAccess (computed by left shifting Delta and adding FirstPageAccess bit at the most significant bit position), and Last-n VPNs (computed as a shifted-XOR of last n VPNs).

Correlated system features may include at least one of the following: translation lookaside buffer (TLB), accesses, misses or miss rate, first-level (L1) data cache accesses, misses or miss rate, lower-level cache accesses, misses or miss rate, and cache pollution.

Correlated program features may include delta or PC⊕Delta when correlated system features include TLB misses per thousand instructions and TLB miss rate.

These and other aspects of the invention will be apparent from the embodiment(s) described below.

### Brief Description of Drawings

The present invention will now be described, by way of example only, with reference to the accompanying figures in which:
Figure 1 illustrates in-page and page-cross prefetch requests;
Figure 2 illustrates a page-cross filter for implementing the present invention;
Figure 3 illustrates the page-cross filter of fig. 2 in greater detail;
Figure 4 illustrates the weighting arrangements for both program and system features of the page-cross filter of fig. 2;
Figure 5 illustrates the role of the virtual update buffer (vUB) and the physical update buffer (pUB) in training of the page-cross filter of fig. 2; and
Figure 6 illustrates the adaptive thresholding used by the page-cross filter of fig. 2.

### Detailed Description of Invention

Example embodiments are described below in sufficient detail to enable those of ordinary skill in the art to embody and implement the systems and processes herein described. It is important to understand that embodiments can be provided in many alternate forms and should not be construed as limited to the examples set forth herein. Accordingly, while embodiments can be modified in various ways and take on various alternative forms, specific embodiments thereof are shown in the drawings and described in detail below as examples. There is no intent to limit to the particular forms disclosed. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

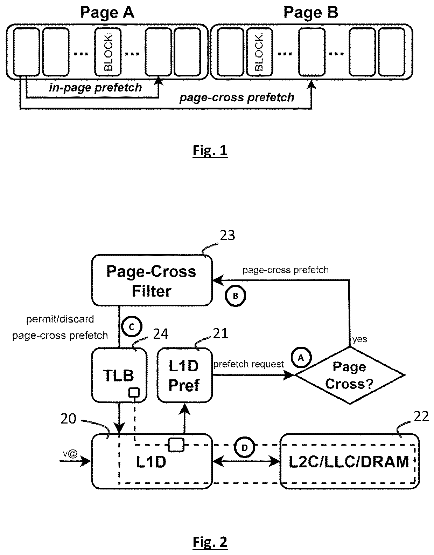

As illustrated in figure 1, a page-cross prefetch request relates to a block in memory which crossed page boundaries. It is a request for that block to be brought into a cache as a cache block to serve demand memory accesses before its eviction from the cache.

Conventional prefetchers have always discarded page-cross prefetch requests given the technical complexities of and risks associated with executing such a prefetch. More specifically, prefetchers placed alongside lower-level caches (L2C, LLC) drive prefetching decisions using physical addresses since these caches are implemented as physically indexed physically tagged (PIPT) structures. These prefetchers typically permit prefetching only within typically 4KB physical page boundaries for security reasons since addresses that are contiguous in the virtual address space might not be contiguous in the physical address space. As such, permitting page-cross prefetching in the physical address space risks introducing channels that could be exploited to attack a system.

However, in respect of first-level (L1) caches and page-cross prefetching, L1 cache prefetchers drive prefetching using virtual addresses since L1 caches are typically implemented as VIPT caches. More specifically, VIPT caches use a virtual address for the index and a physical address in a tag. The inventor has realised that, conceptually, L1 cache prefetchers can cross 4KB page boundaries since they can access a TLB. Moreover, that this may be possible using hardware prefetchers placed alongside VIPT structures.

Figure 2 shows, schematically, part of a processor design in which, upon L1D 20 demand memory accesses, an L1D prefetcher 21 is activated and produces prefetch requests. For each prefetch request, a determination is made as to whether it is a page-cross prefetch request or not (step A). If it is, a page-cross filter 23 is activated (step B) only for those page-cross prefetch requests that cross page boundaries, with the filter deciding which requests to permit and which to discard. Page-cross prefetch requests that are permitted are directed to TLB 24 to find the translation of the page where the prefetched cache block resides (step C). In virtual memory systems, each memory access demands for a virtual-to-physical address translation that implies additional references to the memory hierarchy (caches, DRAM), one per each level of a radix tree page table, to obtain a requested translation. To reduce memory references due to page walks and to accelerate address translation, vendors typically implement TLBs, private per-core hardware caches, that store the most used translation entries. TLBs partially reduce the address translation overheads by making the most recently used translations rapidly available, obviating the need for triggering long-latency page walks to fetch the corresponding translations from a page table. Typically, multi-level TLB hierarchies are implemented with small instruction and data first-level TLBs (iTLB and dTLB) and a large last-level TLB (sTLB). iTLBs and dTLBs accommodate instruction and data page table entries (PTEs), respectively, while both data and instruction PTEs are stored within the same sTLB structure. If a requested translation is not TLB resident, a page walk is triggered to bring the corresponding translation into the TLB (step D). Finally, the page-cross prefetch is permitted and the prefetched cache block is retrieved from memory 22 and stored in L1D cache 20.

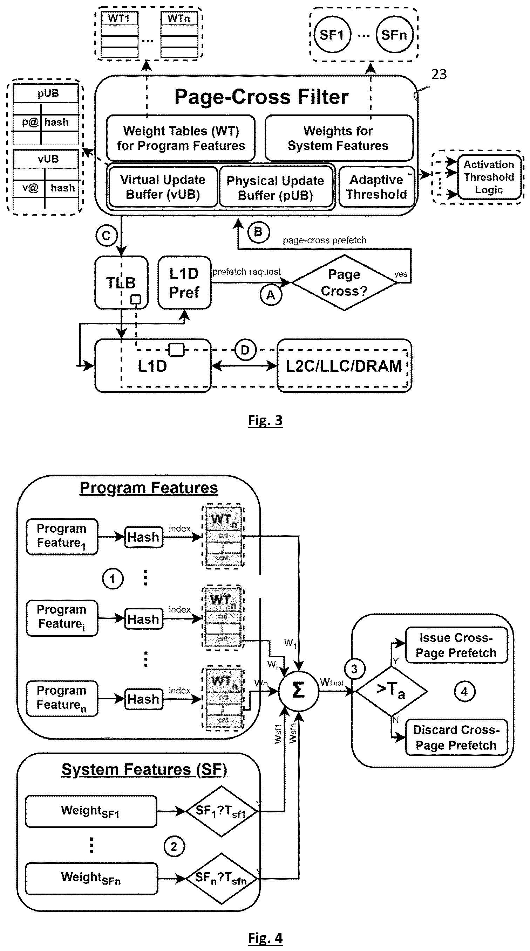

Figure 3 illustrates, schematically, the page-cross filter 23 of the apparatus of fig. 2 in greater detail comprising various hardware components: weighting arrangements for both program and system features, a virtual update buffer (vUB), a physical update buffer (pUB) and an adaptive threshold module which applies activation threshold logic.

The prediction operation of the filter employing the weighting arrangements for both program and system features are shown in figure 4, with prediction happening in four stages:
Stage (1) concerns program features, that is information based on program context such as control flow information. The filter first extracts a set of selected program features from the requests being filtered. Each feature is hashed and used to index a corresponding perceptron weight table (WTₙ) entry, ideally implemented with 5-bit saturating counters. After indexing, a weight (Wi) is retrieved from each WTₙ. Specific program features are selected offline with the highest performing program features being determined by testing. For page-cross prefetch requests, the inventors testing demonstrated that program features Delta (being the difference between addresses of consecutive memory accesses) and PC⊕Delta (Program Counter (PC) of memory access XOR Delta used by the prefetcher to issue a page-cross prefetch). Testing further demonstrated the merits of other program features including Virtual Page Number (VPN, being the virtual address of a prefetch request), PC, PC⊕VPN, PC⊕CacheLineOffset, CacheLineOffset (being the bits used to determine the byte to be accessed from the cache line), VPN⊕Delta, CacheLineOffset+FirstPageAccess (computed by left shifting CacheLineOffset and adding FirstPageAccess at the most significant bit position), FirstPageAccess (being binary indicating if a page-cross prefetch is to a recently touched page), PC+FirstPageAccess (computed by left shifting PC and adding FirstPageAccess bit at the most significant bit position), Delta+FirstPageAccess (computed by left shifting Delta and adding FirstPageAccess bit at the most significant bit position), and Last-n VPNs (computed as a shifted-XOR of last n VPNs). It should be noted that the above program features are not specialized to a specific prefetcher and that specialized program features that leverage metadata of specific prefetchers has the potential to further improve the effectiveness of a page-cross prefetch filter.
Stage (2) relates to system features which, similar to program features, uses 5-bit saturating counters to reflect the system state in different phases under page-cross prefetching (e.g., TLB and cache pressure). Specifically, the value of each system feature is computed and compared with a threshold (SFn?T_{sf}n): if the system feature value (SFn) exceeds (or subceeds, depending on the feature) the associated threshold (Tsfn), then the corresponding weight (weightSFn) is taken into account. This reflects the desirability of system features only contributing to the weighting during specific phases/system states when they become highly relevant to a determination of the usefulness of a prefetch request. The highest performing system features after testing with page-cross requests proved to be STLB misses per kilo instructions (MPKI) and STLB miss rate. Testing further demonstrated the merits of other system features including L1D and LLC MPKI and miss rates.

Weighing program features are critical for the accuracy and the performance of a page-cross filter. However, they do not consider the system state (e.g., TLB/cache pressure) in their decision making. As such, a page-cross prefetch that has been proven useful in the past might be less useful during different execution phases/system state as reflected by system features.

In respect of sTLB MPKI, this system feature correlates phases with low sTLB MPKI rates (SFsTLB_mpki<TsTLB_mpki) with the usefulness of page-cross prefetching. When sTLB MPKI is low, the probability of a page-cross prefetch request to hit in the TLB hierarchy is high and the probability of triggering a page walk is low. Hence, if page-cross prefetching is useful/useless during these phases, this feature makes the filter more/less aggressive towards page-cross prefetching by increasing the final cumulative weight (step 3, figure 4). As such, this system feature usefully contributes to the decision making only when SFsTLB_mpki<TsTLB_mpki.

In respect of sTLB miss rate, this system feature measures the usefulness of page-cross prefetching during phases with high sTLB miss rate (SFsTLB_missrate>TsTLB_missrate) to identify missed opportunities that other features cannot capture. When most demand memory accesses miss in the sTLB, permitting the L1D prefetcher to trigger page-cross prefetches might improve the sTLB hit rate due to the page walks introduced for page-cross prefetch requests. Hence, if page-cross prefetching is useful during phases with high sTLB miss rate, this feature increases the probability of the filter permitting page-cross prefetching requests. As such, this feature usefully contributes to the decision making when SFsTLB_missrate>TsTLB_missrate.

In stage (3), the weights of all considered program and system features are summed to generates a final weight (Wfinal). Then, Wfinal is compared with an activation threshold Tₐ.

In stage (4), a final decision is made as to whether to permit or discard a cross-page prefetch request. If Wfinal is greater than Tₐ, the page-cross prefetch is permitted; otherwise it is discarded.

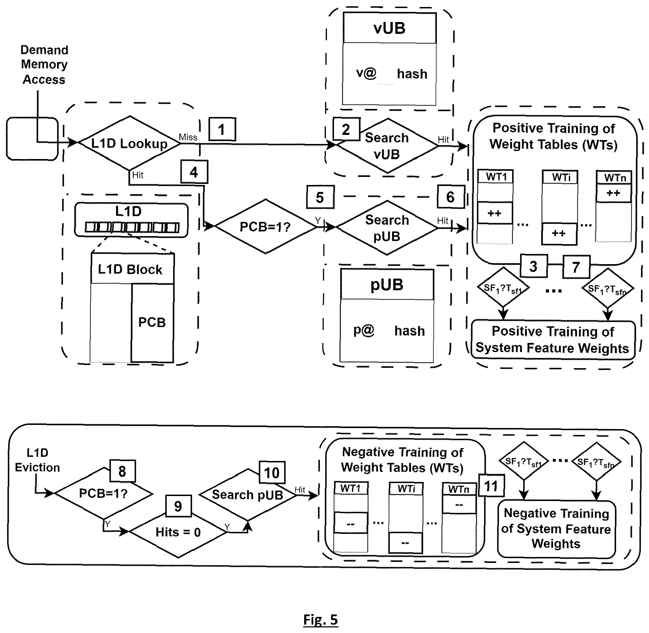

Of the other hardware components of the filter 23, the virtual update buffer (vUB) and a physical update buffer (pUB) are used to train the filter as illustrated in figure 5. Training of the 23 takes place upon L1D demand accesses and L1D evictions.

The virtual update buffer stores addresses of cross-page prefetches that are not permitted coupled with a corresponding hash signature. Upon determining an L1D demand access miss (step [1] in figure 5), vUB is searched for possible hits (step [2]). A vUB hit (step [3]) indicates that the corresponding page-cross prefetch request was erroneously discarded by the filter, thus the hash indexes of the hit vUB entry are used to increment the respective program and system weights (positive training), increasing the probability of permitting similar page-cross prefetch requests in the future.

Similarly, the physical update buffer stores addresses of cross-page prefetches that are permitted coupled with corresponding hash signatures. Upon determining a L1D demand access hit (step [4]) (where a cache block was fetched in the cache due to a cross-page prefetch request, has a corresponding page-cross bit set to 1 (step [5]) and was fetched), the pUB is looked up and upon a pUB hit (step [6]), the hash indexes of the hit pUB entry are used to increase the respective program and system features' weights (step [7]). Upon an L1D eviction of a cache block with its corresponding page-cross bit set (step [8]), a check is made as to whether the evicted cache block has provided at least one hit during its lifetime in the cache (step [9]). If not, pUB is searched for finding the matching entry (step [10]) since pUB stores the physical addresses and the hash indexes of the permitted page-cross prefetches; for this reason pUB stores physical addresses and not virtual addresses as vUB. The hash indexes of the matching pUB entry are used to decrease the respective program and system weights for negative training (step [11]) since evicted L1D cache blocks that did not provide any hit indicate that the filter failed at classifying the corresponding page-cross prefetches requests as useless.

In the third stage (3) of prediction shown in figure 4, the weights of all considered program and system features are summed to generates a final weight (Wfinal). Then, Wfinal is compared with an activation threshold Tₐ. To determine the usefulness of a page-cross prefetch, the filter compares a cumulative weight (sum of program feature weights and system feature weights) with a threshold whereby prefetches with cumulative weights higher than the threshold are permitted and the others are discarded. Using a static threshold Tₐ is adequate when targeting to improve the performance of a specific application domain, but it provides suboptimal gains when the target is multiple diverse application domains. The inventors have empirically determined that different applications and execution phases have different optimal Tₐ values and to implement this, an epoch-based adaptive scheme is used that leverages various runtime information to tune the threshold used in the decision making. Such runtime information used by the adaptive thresholding scheme may include the accuracy of cross-page prefetching, instructions per cycle of each epoch, lower-level cache MPKI, L1 Instruction cache (L1I) MPKI and re-order buffer occupancy.

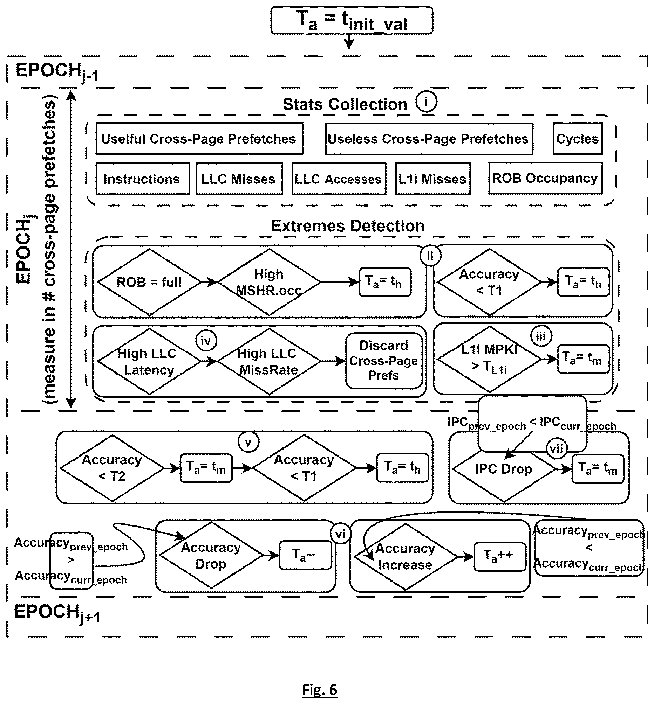

More specifically, figure 6 presents the operation of the thresholding scheme when Tₐ is initially set to an initial value t_{init_val}. During an epoch, the thresholding scheme collects the following runtime information, step (i) in figure 6, that are used to tune Tₐ: number of useful and useless page-cross prefetches, IPC, LLC miss rate, ROB pressure, and L1I MPKI. In addition to the collection of this information, the thresholding scheme also detects extreme behaviours, step (ii), i.e., phases with very high cache and ROB pressure and adjusts the value of Tₐ accordingly. Specifically, it sets Tₐ to a high threshold (tₕ) to only permit page-cross prefetches with very high confidence in the following cases: (1) there is high ROB pressure and many inflight L1D misses and (2) the accuracy of page-cross prefetching has reached a low value (T1). Moreover, the thresholding scheme sets Tₐ to a medium value (tₘ), step (iii), when there is high L1I pressure (L1i MPKI>TL1i) to avoid exacerbating the contention between page-cross prefetches and demand code accesses in L2C. Finally, during phases with very high LLC pressure, the thresholding scheme disables page-cross prefetching, step ( iv); if LLC pressure drops, then page-cross prefetching might be activated again due to vUB's operation. At the end of an epoch, the thresholding scheme potentially updates Tₐ using the runtime information collected during the previous epoch. Specifically, it takes into account the accuracy of page-cross prefetching, step (v), and it forces a medium or high threshold when the accuracy is lower than thresholds T2 and T1, respectively. Moreover, if there is an increase (or decrease) in page-cross prefetching accuracy between two consecutive epochs, step (vi), it increases (or decreases) the currently used Tₐ by one. Finally, if there is a drop in IPC between two consecutive epochs, step (vii), it sets Tₐ to tₘ (if Tₐ was lower than tₘ).

In prototype testing using commercially available prefetchers, performance increases have been realised of up to 1.8% and 2.6% when compared against equivalent arrangements configured to always permit page-cross prefetch requests and always discard page-cross prefetch requests respectively.

The present invention may be applicable to any processor design that uses cache prefetchers operating with virtual addresses.

While various embodiments have been described and/or illustrated herein in the context of fully functional computing systems, one or more of these exemplary embodiments may be distributed as a program product in a variety of forms, regardless of the particular type of computer-readable-storage media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the exemplary embodiments disclosed herein. In addition, one or more of the modules described herein may transform data, physical devices, and/or representations of physical devices from one form to another.

The preceding description has been provided to enable others skilled in the art to best utilize various aspects of the exemplary embodiments disclosed herein. This exemplary description is not intended to be exhaustive or to be limited to any precise form disclosed. The embodiments disclosed herein should be considered in all respects illustrative and not restrictive. Reference should be made to the appended claims in determining the scope of the instant disclosure.

## Claims

1. A method of filtering requests for a cache, wherein the requests comprise page-cross prefetch requests, and wherein the cache is a virtually indexed physically tagged cache, the method comprising the steps of:
correlating program features and/or system features associated with the requests to the determined usefulness of those requests to achieve correlation results;
training a page-cross prefetch filter (23) with the correlation results; and
determining whether to permit or discard a subsequent request using the trained filter; and
**characterized in that**
a request is determined to be useful when either:
for a permitted request, a corresponding cache block brought into the cache served a demand memory access before its eviction from the cache, or
for a discarded request, a corresponding cache block that would have been brought into the cache would have served a demand memory access before its eviction from the cache.

2. The method according to claim 1 further comprising:
for permitted requests, tracking corresponding cache blocks brought into the cache to determine if those cache blocks served a demand memory access before their eviction from the cache.

3. The method according to claim 2, wherein tracking is done by adding one or more data bits to cache blocks brought into the cache, wherein the one or more data bits indicate that a cache block was brought into the cache by a page-cross prefetch request.

4. The method according to claim 2 or claim 3, wherein the usefulness of a permitted request is determined upon eviction of corresponding cache blocks from the cache.

5. The method according to any preceding claim further comprising,
for discarded requests:
storing addresses of corresponding cache blocks or derivatives thereof; and
upon a demand access miss, searching those addresses or derivatives thereof to determine if the demand access miss could have been avoided by not discarding a request.

6. The method according to any preceding claim wherein the correlation results train the filter by updating weightings which relate program and/or system features associated with a request to the usefulness of that request.

7. The method according to claim 6, wherein, for permitted requests, the correlation results update counters for corresponding program and/or system features by:
increasing a counter if a cache block brought into the cache serves a demand memory access before eviction from the cache, and
decreasing a counter if a cache block brought into a cache does not serve a demand memory access before eviction from the cache.

8. The method according to claim 6 wherein, for discarded requests, the correlation results update counters for corresponding program and/or system features by:
increasing a counter if a cache block that would have been brought into the cache would have served one or more demand memory accesses before eviction from the cache, and
decreasing a counter if a cache block that would have been brought into the cache would not have served a demand memory access before eviction from the cache.

9. The method according to any of claims 6 to 8 wherein the correlation results train the filter by updating saturation counters for corresponding program features in a perceptron weight table.

10. A method according to any of claims 6 to 9 wherein the step of determining whether to permit or discard a subsequent request using the trained filter is done by:
comparing to a threshold a cumulative weighting which relates program and/or system features associated with that request to the usefulness of that request, whereby if the threshold is exceeded, that request is permitted and if not, that request is discarded, and wherein the threshold is a dynamic threshold which is tuned at runtime for optimisation with different applications and/or execution phases.

11. The method according to any preceding claim wherein correlated program features include at least one of the following, or combination(s) or hash(es) thereof:
- Delta, being the difference between addresses of consecutive memory accesses,
- Virtual Page Number, VPN, being the virtual address of a request,
- Program Counter, PC,
- PC⊕Delta,
- PC⊕VPN,
- PC⊕CacheLineOffset, CacheLineOffset being the bits used to determine the byte to be accessed from the cache line,
- VPN⊕Delta,
- CacheLineOffset+FirstPageAccess, computed by left shifting CacheLineOffset and adding FirstPageAccess at the most significant bit position, FirstPageAccess being binary indicating if a page-cross prefetch is to a recently touched page,
- PC+FirstPageAccess, computed by left shifting PC and adding FirstPageAccess bit at the most significant bit position,
- Delta+FirstPageAccess, computed by left shifting Delta and adding FirstPageAccess bit at the most significant bit position, and
- Last-n VPNs, computed as a shifted-XOR of last n VPNs.

12. The method according to any preceding claim wherein correlated system features include at least one of the following:
- translation lookaside buffer, TLB (24), accesses, misses or miss rate,
- L1 data cache accesses, misses or miss rate,
- lower level cache accesses, misses or miss rate, and
- cache pollution.

13. The method according to any preceding claim wherein that correlated program features include delta or PC⊕Delta, and wherein correlated system features include TLB misses per thousand instructions and TLB miss rate.

14. Apparatus comprising a processor, a memory and a cache, all configured to implement a method as claimed in any of the preceding claims.

## Patentansprüche

1. Verfahren zum Filtern von Anfragen für einen Zwischenspeicher, wobei die Anfragen seitenübergreifende Vorausladeanfragen umfassen und wobei der Zwischenspeicher ein virtuell indizierter, physikalisch getaggter Zwischenspeicher ist, wobei das Verfahren die folgenden Schritte umfasst:
Korrelieren von Programmmerkmalen und/oder Systemmerkmalen, die den Anfragen zugeordnet sind, mit der ermittelten Nützlichkeit jener Anfragen, um Korrelationsergebnisse zu erzielen;
Trainieren eines seitenübergreifenden Vorausladefilters (23) mit den Korrelationsergebnissen; und
Bestimmen, eine anschließende Anfrage unter Verwendung des trainierten Filters zuzulassen oder zu verwerfen; und
**dadurch gekennzeichnet, dass** bestimmt wird, dass eine Anfrage nützlich ist, wenn entweder:
für eine zugelassene Anfrage, ein entsprechender Zwischenspeicherblock, der in den Zwischenspeicher gebracht wurde, vor seiner Entfernung aus dem Zwischenspeicher einem Speicheranforderungszugriff diente, oder
für eine verworfene Anfrage, ein entsprechender Zwischenspeicherblock, der in den Zwischenspeicher gebracht worden wäre, vor seiner Entfernung aus dem Zwischenspeicher einem Speicheranforderungszugriff gedient hätte.

2. Verfahren nach Anspruch 1, ferner umfassend:
für zugelassene Anfragen, Verfolgen entsprechender Zwischenspeicherblöcke, die in den Zwischenspeicher gebracht wurden, um zu bestimmen, ob jene Zwischenspeicherblöcke vor ihrer Entfernung aus dem Zwischenspeicher einem Speicheranforderungszugriff dienten.

3. Verfahren nach Anspruch 2, wobei das Verfolgen durch Hinzufügen eines oder mehrerer Datenbits zu Zwischenspeicherblöcken, die in den Zwischenspeicher gebracht wurden, getätigt wird, wobei das eine oder die mehreren Datenbits angeben, dass ein Zwischenspeicherblock durch eine seitenübergreifende Vorausladeanfrage in den Zwischenspeicher gebracht wurde.

4. Verfahren nach Anspruch 2 oder Anspruch 3, wobei die Nützlichkeit einer zugelassenen Anfrage bei dem Entfernen entsprechender Zwischenspeicherblöcke aus dem Zwischenspeicher bestimmt wird.

5. Verfahren nach einem der vorhergehenden Ansprüche, ferner umfassend,
für verworfene Anfragen:
Speichern von Adressen entsprechender Zwischenspeicherblöcke oder Derivaten davon; und
bei einem Zugriffsanforderungsfehlschlag, Durchsuchen jener Adressen oder Derivate davon, um zu bestimmen, ob der Zugriffsanforderungsfehlschlag durch Nicht-Verwerfen einer Anfrage hätte vermieden werden können.

6. Verfahren nach einem der vorhergehenden Ansprüche, wobei die Korrelationsergebnisse den Filter durch Aktualisieren von Gewichtungen trainieren, die Programm- und/oder Systemmerkmale, die einer Anfrage zugeordnet sind, auf die Nützlichkeit jener Anfrage beziehen.

7. Verfahren nach Anspruch 6, wobei, für zugelassene Anfragen, die Korrelationsergebnisse Zähler für entsprechende Programm-und/oder Systemmerkmale durch Folgendes aktualisieren:
Erhöhen eines Zählers, falls ein Zwischenspeicherblock, der in den Zwischenspeicher gebracht wurde, vor der Entfernung aus dem Zwischenspeicher einem Speicheranforderungszugriff dient, und
Verringern eines Zählers, falls ein Zwischenspeicherblock, der in einen Zwischenspeicher gebracht wurde, vor der Entfernung aus dem Zwischenspeicher keinem Speicheranforderungszugriff dient.

8. Verfahren nach Anspruch 6, wobei, für verworfene Anfragen, die Korrelationsergebnisse Zähler für entsprechende Programm-und/oder Systemmerkmale durch Folgendes aktualisieren:
Erhöhen eines Zählers, falls ein Zwischenspeicherblock, der in den Zwischenspeicher gebracht worden wäre, vor der Entfernung aus dem Zwischenspeicher einem oder mehreren Speicheranforderungszugriffen gedient hätte, und
Verringern eines Zählers, falls ein Zwischenspeicherblock, der in den Zwischenspeicher gebracht worden wäre, vor der Entfernung aus dem Zwischenspeicher keinem Speicheranforderungszugriff gedient hätte.

9. Verfahren nach einem der Ansprüche 6 bis 8, wobei die Korrelationsergebnisse den Filter durch Aktualisieren von Sättigungszählern für entsprechende Programmmerkmale in einer Perzeptron-Gewichtstabelle trainieren.

10. Verfahren nach einem der Ansprüche 6 bis 9, wobei der Schritt des Bestimmens, eine anschließende Anfrage unter Verwendung des trainierten Filters zuzulassen oder zu verwerfen, durch Folgendes getätigt wird:
Vergleichen, mit einem Schwellenwert, einer kumulativen Gewichtung, die Programm- und/oder Systemmerkmale, die jener Anfrage zugeordnet sind, auf die Nützlichkeit jener Anfrage bezieht, wobei, falls der Schwellenwert überschritten wird, jene Anfrage zugelassen wird und, falls nicht, jene Anfrage verworfen wird und wobei der Schwellenwert ein dynamischer Schwellenwert ist, der bei Laufzeit zur Optimierung mit unterschiedlichen Anwendungen und/oder Ausführungsphasen abgestimmt wird.

11. Verfahren nach einem der vorhergehenden Ansprüche, wobei korrelierte Programmmerkmale mindestens eines von Folgendem oder eine Kombination(en) oder ein Hash(es) davon beinhalten:
- Delta, was die Differenz zwischen Adressen aufeinanderfolgender Speicherzugriffe ist,
- einer virtuellen Seitennummer, VPN, was die virtuelle Adresse einer Anfrage ist,
- einem Programmzähler, PC,
- PC⊕Delta,
- PC⊕VPN,
- PC⊕CacheLineOffset, wobei CacheLineOffset die Bits sind, die dazu verwendet werden, das Byte zu bestimmen, auf das aus der Zwischenspeicherzeile zuzugreifen ist,
- VPN⊕Delta,
- CacheLineOffset+FirstPageAccess, berechnet durch Linksverschieben von CacheLineOffset und Hinzufügen von FirstPageAccess an der höchstwertigen Bitposition, wobei FirstPageAccess, das binär ist, angibt, ob eine seitenübergreifende Vorausladung auf eine kürzlich berührte Seite ist,
- PC+FirstPageAccess, berechnet durch Linksverschieben des PC und Hinzufügen des FirstPageAccess-Bits an der höchstwertigen Bitposition,
- Delta+FirstPageAccess, berechnet durch Linksverschieben des Delta und Hinzufügen des FirstPageAccess-Bits an der höchstwertigen Bitposition, und
- VPNs letzter *n*, berechnet als ein verschobenes XOR von VPNs letzter *n*.

12. Verfahren nach einem der vorhergehenden Ansprüche, wobei korrelierte Systemmerkmale mindestens eines von Folgendem beinhalten:
- Zugriffen, Fehlschlägen oder einer Fehlschlagrate eines Translation Lookaside Buffer, TLB (24),
- Zugriffen, Fehlschlägen oder einer Fehlschlagrate eines L1-Datenzwischenspeichers,
- Zugriffen, Fehlschlägen oder einer Fehlschlagrate eines Zwischenspeichers niedrigerer Ebene und
- einer Zwischenspeicherverunreinigung.

13. Verfahren nach einem der vorhergehenden Ansprüche, wobei korrelierte Programmmerkmale Delta oder PC⊕Delta beinhalten und wobei korrelierte Systemmerkmale TLB-Fehlschläge pro tausend Anweisungen und die TLB-Fehlschlagrate beinhalten.

14. Vorrichtung, umfassend einen Prozessor, einen Speicher und einen Zwischenspeicher, die alle dazu konfiguriert sind, ein Verfahren nach einem der vorhergehenden Ansprüche umzusetzen.

## Revendications

1. Procédé de filtrage de requêtes pour un cache, dans lequel les requêtes comprennent des requêtes de préextraction inter-pages, et dans lequel le cache est un cache virtuellement indexé et physiquement étiqueté, le procédé comprenant les étapes suivantes :
la corrélation de caractéristiques de programme et/ou de système associées aux requêtes à l'utilité déterminée de ces requêtes pour obtenir des résultats de corrélation ;
l'entraînement d'un filtre de préextraction inter-pages (23) avec les résultats de corrélation ; et
le fait de déterminer s'il convient d'autoriser ou de rejeter une requête ultérieure à l'aide du filtre entraîné ; et
**caractérisée en ce qu'**une requête est déterminée comme étant utile lorsque soit :
pour une requête autorisée, un bloc de cache correspondant introduit dans le cache a servi à un accès mémoire à la demande avant son éviction du cache, soit
pour une requête rejetée, un bloc de cache correspondant qui aurait été introduit dans le cache aurait servi à un accès mémoire à la demande avant son éviction du cache.

2. Procédé selon la revendication 1 comprenant en outre :
pour les requêtes autorisées, le suivi de blocs de cache correspondants introduits dans le cache pour déterminer si ces blocs de cache ont servi à un accès mémoire à la demande avant leur éviction du cache.

3. Procédé selon la revendication 2, dans lequel le suivi est effectué en ajoutant un ou plusieurs bits de données aux blocs de cache introduits dans le cache, dans lequel les un ou plusieurs bits de données indiquent qu'un bloc de cache a été introduit dans le cache par une requête de préextraction inter-pages.

4. Procédé selon la revendication 2 ou la revendication 3, dans lequel l'utilité d'une requête autorisée est déterminée lors de l'éviction de blocs de cache correspondants du cache.

5. Procédé selon une quelconque revendication précédente comprenant en outre ,
pour les requêtes rejetées :
le stockage d'adresses de blocs de cache correspondants ou de dérivés de ceux-ci ; et
en cas d'échec d'accès à la demande, la recherche de ces adresses ou leurs dérivés pour déterminer si l'échec d'accès à la demande aurait pu être évité en ne rejetant pas une requête.

6. Procédé selon une quelconque revendication précédente dans lequel les résultats de corrélation entraînent le filtre en mettant à jour les pondérations qui relient les caractéristiques de programme et/ou de système associées à une requête à l'utilité de cette requête.

7. Procédé selon la revendication 6, dans lequel, pour les requêtes autorisées, les résultats de corrélation mettent à jour les compteurs des caractéristiques de programme et/ou de système correspondantes par :
l'augmentation d'un compteur si un bloc de cache introduit dans le cache répond à une demande d'accès mémoire avant d'être évincé du cache, et
la diminution d'un compteur si un bloc de cache introduit dans un cache ne répond pas à une demande d'accès mémoire avant d'être évincé du cache.

8. Procédé selon la revendication 6 dans lequel, pour les requêtes rejetées, les résultats de corrélation mettent à jour les compteurs des caractéristiques de programme et/ou de système correspondantes par :
l'augmentation d'un compteur si un bloc de cache qui aurait été chargé dans le cache aurait servi un ou plusieurs accès mémoire à la demande avant d'être évincé du cache, et
la diminution d'un compteur si un bloc de cache qui aurait été chargé dans le cache n'aurait pas servi un accès mémoire à la demande avant d'être évincé du cache.

9. Procédé selon l'une quelconque des revendications 6 à 8 dans lequel les résultats de corrélation entraînent le filtre en mettant à jour les compteurs de saturation pour les caractéristiques de programme correspondantes dans une table de poids de perceptron.

10. Procédé selon l'une quelconque des revendications 6 à 9, dans lequel l'étape du fait de déterminer s'il convient d'autoriser ou de rejeter une requête ultérieure à l'aide du filtre entraîné est effectué par :
la comparaison à un seuil d'une pondération cumulative qui relie les caractéristiques de programme et/ou de système associées à cette requête à l'utilité de cette requête, moyennant quoi si le seuil est dépassé, cette requête est autorisée et sinon, cette requête est rejetée, et dans lequel le seuil est un seuil dynamique qui est ajusté au moment de l'exécution pour une optimisation avec différentes applications et/ou phases d'exécution.

11. Procédé selon une quelconque revendication précédente dans lequel les caractéristiques de programme corrélées comportent au moins l'une des caractéristiques suivantes, ou combinaison(s) ou hachage(s) de celles-ci :
- Delta, étant la différence entre les adresses d'accès mémoire consécutifs,
- Numéro de page virtuelle, VPN, étant l'adresse virtuelle d'une requête,
- Compteur de programme, PC,
- PC⊕Delta,
- PC⊕VPN,
- PC⊕CacheLineOffset, CacheLineOffset étant les bits utilisés pour déterminer l'octet à accéder à partir de la ligne de cache,
- VPN⊕Delta,
- CacheLineOffset+FirstPageAccess, calculé en décalant CacheLineOffset vers la gauche et en ajoutant FirstPageAccess à la position du bit le plus significatif, FirstPageAccess étant binaire et indiquant si une préextraction d'inter-pages concerne une page récemment consultée,
- PC+FirstPageAccess, calculé en décalant PC vers la gauche et en ajoutant le bit FirstPageAccess à la position du bit le plus significatif,
- Delta+FirstPageAccess, calculé en décalant Delta vers la gauche et en ajoutant le bit FirstPageAccess à la position du bit le plus significatif, et
- les*n* derniers VPN, calculés comme un XOR décalé des n derniers VPN.

12. Procédé selon une quelconque revendication précédente dans lequel les caractéristiques de système corrélées comportent au moins l'un des éléments suivants :
- accès, échecs ou taux d'échec du tampon de traduction, TLB (24),
- accès, échecs ou taux d'échec du cache de données L1,
- accès, échecs ou taux d'échec du cache de niveau inférieur, et
- pollution du cache.

13. Procédé selon une quelconque revendication précédente dans lequel ces caractéristiques de programme corrélées comportent delta ou PC⊕Delta, et dans lequel les caractéristiques de système corrélées comportent les échecs de TLB par mille instructions et le taux de échecs de TLB.

14. Appareil comprenant un processeur, une mémoire et un cache, tous configurés pour mettre en œuvre un procédé tel que revendiqué dans l'une quelconque des revendications précédentes.
